# EUROPEAN PATENT APPLICATION

(11) **EP 4 675 397 A1**
(43) Date of publication of application: **07.01.2026**
(21) Application number: 25174201.1
(22) Date of filing: 05.05.2025
(51) Int. Cl.: G06F 1/3206, G06F 1/3209, G06F 1/3228, G06F 1/3287, G06F 1/329

(54) **METHODS, SYSTEMS, ARTICLES OF MANUFACTURE AND APPARATUS TO PERFORM DYNAMIC FUNCTION CONTROL**

(30) Priority: 03.07.2024 US 202418763642
(71) Applicant: Intel Corporation, Santa Clara, CA 95054 (US)
(72) Inventor: GUIM BERNAT, Francesc, 08036 Barcelona (ES); BROWNE, John J., Limerick, V94 C44N (IE); KUMAR, Karthik, Chandler, 85249 (US); PALERMO, Stephen Thomas, Chandler, 85226 (US); THYAGATURU, Akhilesh S., Ruskin, 33573 (US)
(74) Representative: Maiwald GmbH

(57) **Abstract**

Systems, apparatus, articles of manufacture, and methods are disclosed to perform dynamic function control. An example apparatus includes interface circuitry, machine-readable instructions, and at least one processor circuit to be programmed by the machine-readable instructions to parse a packet for a function directive, activate a function associated with the function directive based on a type of the function directive being associated with an activation instruction, disable the function associated with the function directive based on the type of the function directive being associated with a deactivation instruction, and publish an active function list (AFL) and a passive function list (PFL) based on the type of the function directive.

## Description

### BACKGROUND

In recent years, network connected computing devices have become abundant and feature-rich. Such devices may include any number of circuits and/or corresponding functions to perform tasks.

### BRIEF DESCRIPTION OF THE DRAWINGS

FIG. 1 is a block diagram of an example environment in which example dynamic control circuitry (DCC) operates to perform dynamic function control.
FIG. 2 is a block diagram of an example implementation of the DCC of FIG. 1.
FIG. 3 illustrates an example active function list (AFL) and an example passive function list used by the DCC to perform dynamic function control.
FIG. 4 illustrates an example dynamic control bitmap (DCB) packet including a dynamic control bitmap used by the DCC of FIG. 1 to perform dynamic function control.
FIG. 5 is a block diagram of an example host device that is dynamically controlled by the DCC of FIG. 1.
FIG. 6 is a block diagram of an example environment to perform dynamic function control of a platform.
FIGS. 7-9 are flowcharts representative of example machine-readable instructions and/or example operations that may be executed, instantiated, and/or performed by example programmable circuitry to implement the dynamic control circuitry 102 of FIG. 1.
FIG. 10 is a block diagram of an example processing platform including programmable circuitry structured to execute, instantiate, and/or perform the example machine-readable instructions and/or perform the example operations of FIGS. 7-9 to implement the dynamic control circuitry 102 of FIG. 1.
FIG. 11 is a block diagram of an example implementation of the programmable circuitry of FIG. 10.
FIG. 12 is a block diagram of another example implementation of the programmable circuitry of FIG. 10.

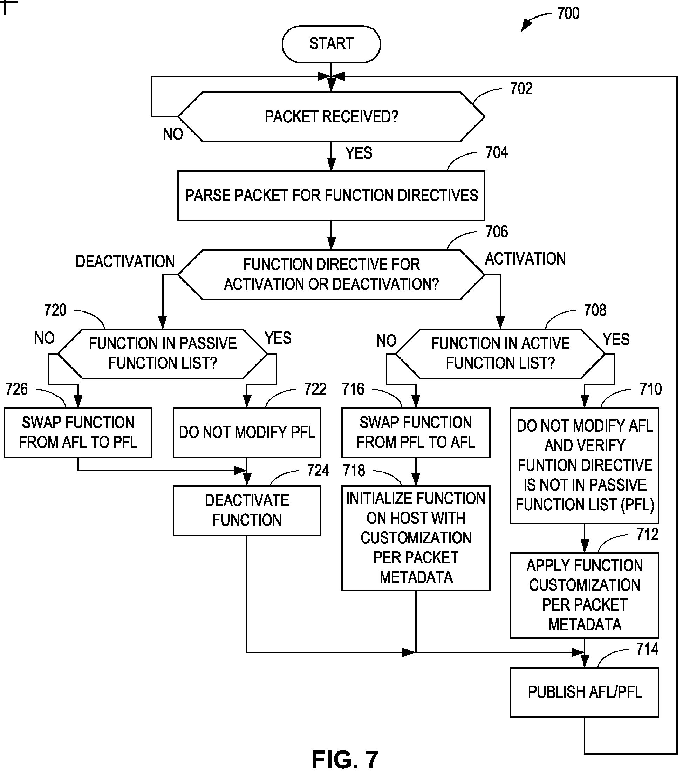

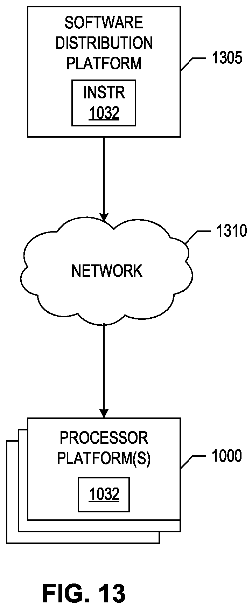

FIG. 13 is a block diagram of an example software/firmware/instructions distribution platform (e.g., one or more servers) to distribute software, instructions, and/or firmware (e.g., corresponding to the example machine-readable instructions of FIGS. 7-9) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

Wakeup-on-Local Area Network (LAN) (WoL) is a networking function that allows a computing device to be turned on (e.g., "woken up") from a low-power state in response to receipt of a network WoL packet. The WoL packet is sometimes referred to as a "magic packet" that is sent over a network to a destination device to be turned on. The WoL packet includes particular protocol formatting to identify identification information of the device to be turned on, such as a medium access control (MAC) address sent to a particular Internet Protocol (IP) address on the network.

However, existing WoL techniques cause the destination computing device to be turned on in its entirety. Stated differently, existing WoL techniques do not exhibit a relatively lower function activation/deactivation granularity (e.g., turning on less than all of the device), but instead turn on the entire destination computing device and its onboard circuitry. As such, in the event the destination computing device is a system-on-chip (SoC) (or a platform) having two or more processing cores, GPUs and/or two or more accelerator circuits, then existing WoL techniques cause the entire SoC to turn on, even in circumstances where one or more of the circuits and/or functions are not needed for a particular task.

Examples disclosed herein may facilitate dynamic and granular host power control. As used herein, a "host" is a target device and/or combination of devices to be controlled at a function level and/or chiplet level in response to DCB packet instructions. In some examples, the host is a platform, such as a personal computer (PC), a server, an SoC and/or any other computational assembly to operate as a composable platform. As used herein, a "chiplet" is an integrated circuit (IC) having one or more particular functionalities. As such, references to a "chiplet" herein include one or more functions. In some examples, chiplets are modular ICs, and two or more chiplets may together be an SoC or platform. In some examples, a chiplet is located in a package with one or more other chiplets.

Examples disclosed herein may facilitate host function activation and/or deactivation so that only one or more targeted portions of the host are affected, thereby allowing improved power conservation in a manner consistent with green energy initiatives. In some examples disclosed herein, bus-level control (e.g., Universal Chiplet Interconnect Express (UCIe), Advanced eXtensible Interface (AXI), etc.) is configured and/or otherwise tailored to permit one or more specific cores of a multi-core processing circuit (e.g., while one or more other cores remain powered off) to be activated and/or otherwise powered on, thereby avoiding corresponding power loss and/or heat generation associated with other cores of the multi-core processing circuit. In some examples, knowledge of job scheduling on and/or with a host is used to address low latency applications in which a relatively greater number of cores and/or accelerators are dynamically instantiated (e.g., by controlling particular indexed bus locations that identify a particular die, a particular computational package, a particular chiplet(s), etc.)

Examples disclosed herein may address concerns with leakage power that results from having computational resources of a host in a low-power state as distinguished from a zero-power state in which a reduced amount of wasteful leakage power occurs. For instance, some known host instantiation techniques (e.g., enumeration performed by Basic Input/Output System (BIOS)) implement a discovery protocol to identify and power-on all components of the host. In some host instantiation techniques, BIOS is not invoked and/or enumeration occurs without BIOS participation. During some instantiation techniques, each component is powered on at a first time to determine its identity and verify it is operating correctly, after which time (at a second time) one or more of those components is placed in a semi-powered-on state (e.g., a low power state). Stated differently, even components that are not needed and/or otherwise desired to operate after the host is initialized must be provided power. Additionally, because known host instantiation techniques activate all on-board components, a corresponding list of those on-board components is generated so that outside actors (e.g., an operating system (OS)) have knowledge of available components. Stated differently, an OS has no visibility to host components unless known instantiation techniques are first employed for power-up and discovery purposes.

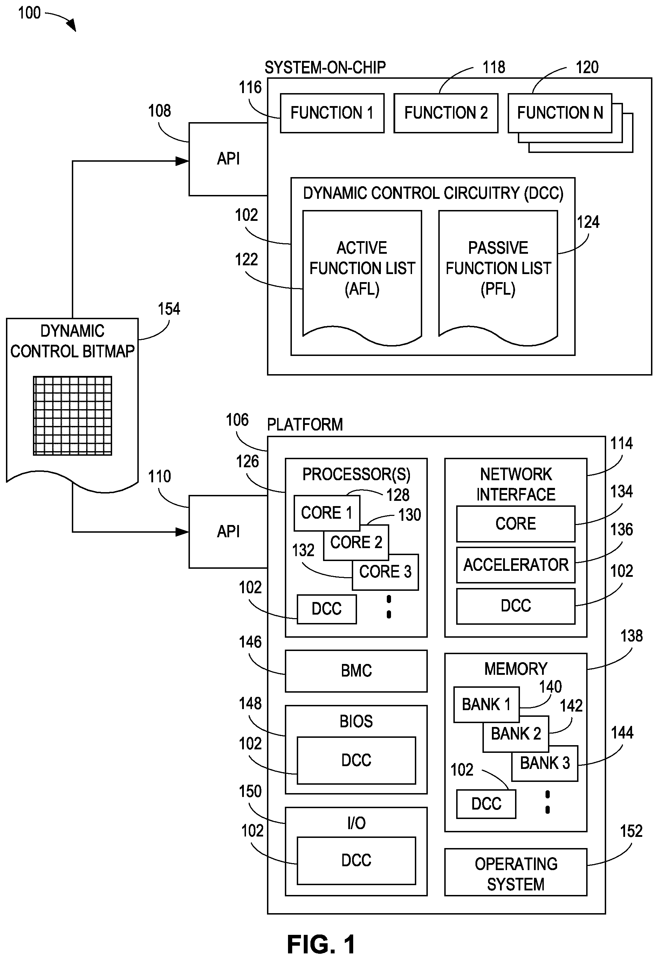

FIG. 1 is a block diagram. The block diagram of FIG. 1 includes an example environment 100 in which example dynamic control circuitry (DCC) (102) operates to perform dynamic function control of a host. In the illustrated example of FIG. 1, the environment 100 includes a first host 104, which is shown as an SoC, and a second host 106, which is shown as a platform (e.g., a PC, a server, a laptop, etc.). The first host 104 includes a first application programming interface (API) 108, and the second host 106 includes a second API 110 to receive external packet information and/or communications 112. While the illustrated example of FIG. 1 includes the first API 108 and the second API 110 to receive packet information 112, examples disclosed herein are not limited thereto. In some examples, communications 112 may be sent/received by one or more interface (e.g., networking) circuits, such as an example network interface 114 of the second host 106.

The example first host 104 (e.g., the SoC) includes a first function 116, a second function 118, and any number of third functions 120 (which may be the same, or different). As described above, functions may be implemented as chiplets such that the first function 116 is a modular IC having a particular functional capability to perform one or more tasks when supplied with power. The example first host 104 also includes the DCC 102, described in further detail below. The DCC 102 of the host 104 includes an active function list (AFL) 122 and a passive function list (PFL) 124. The illustrated example of FIG. 1 includes several additional instances of the DCC 102 without explicitly showing a corresponding AFL and/or PFL, but it should be understood that this is omitted from FIG. 1 as a convenience and not a limitation of the DCC 102.

The example second host 106 includes a processor circuit 126 (e.g., a processor bank) having a first core 128, a second core 130, and a third core 132. While the example processor circuit 126 includes three (3) cores, examples disclosed herein are not limited to any particular number of cores. The example processor circuit 126 also includes the DCC 102 (e.g., a separate structure from the DCC 102 associated with the first host 104 and/or other instances of the DCC 102 in the environment 100 of the illustrated example of FIG. 1.). The example second host 106 includes the network interface 114 having a core 134, an accelerator 136, and the DCC 102. The example second host 106 includes a memory 138 (e.g., a memory circuit) having a first bank 140, a second bank 142, a third bank 144, and the DCC 102. The example second host 106 includes a board management controller (BMC) 146 and BIOS 148, which includes the DCC 102. The example second host 106 includes input/output circuitry 150, which includes the DCC 102, and an OS 152.

The illustrated example of FIG. 1 also includes a dynamic control bitmap (DCB) 154, which is sometimes referred to as a DCB packet. As described in further detail below, the DCB may be formatted, tailored and/or otherwise configured to cause one or more particular functions of a host to deactivate, or activate based on particular operating parameters. In some examples, an external entity (e.g., an orchestrator, an OS, etc.) may structure the DCB 154 with activation and/or deactivation instructions based on the AFL 122 and/or the PFL 124. In some examples, the DCC 102 publishes and/or otherwise makes the AFL 122 and/or the PFL 124 available to one or more external entities so that host functions are known to the requesting entity (e.g., enable an OS to be aware of available functions even when they are not previously enumerated by traditional enumeration techniques, e.g., BIOS).

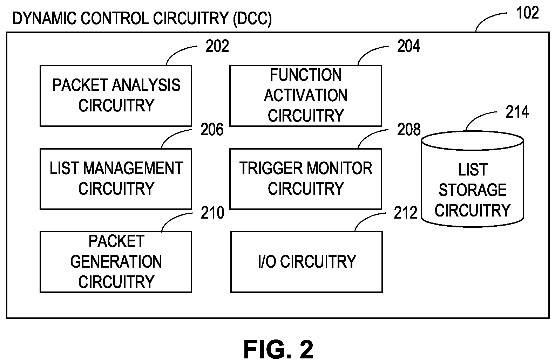

FIG. 2 is a block diagram. The block diagram of FIG. 2 includes an example implementation of the dynamic control circuitry 102 of FIG. 1 to do dynamic function control. The example DCC 102 of FIG. 2 includes example packet analysis circuitry 202, example function activation circuitry 204, example list management circuitry 206, example trigger monitor circuitry 208, example packet generation circuitry 210, example I/O circuitry 212, and example list storage circuitry 214 (e.g., a list storage database).

The dynamic control circuitry 102 of FIG. 2 may be instantiated (e.g., creating an instance of, bring into being for any length of time, materialize, implement, etc.) by programmable circuitry such as a Central Processor Unit (CPU) executing first instructions. Additionally or alternatively, the dynamic control circuitry 102 of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

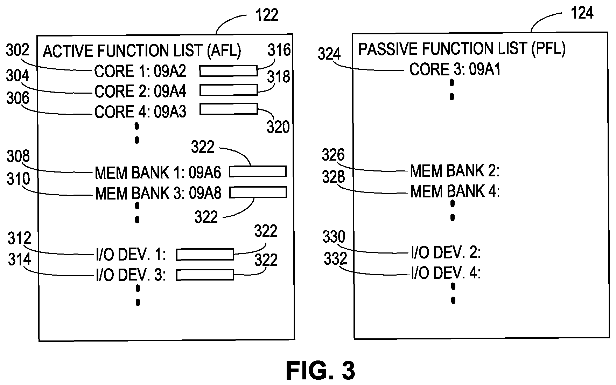

In circumstances where the DCC 102 receives and/or otherwise retrieves a DCB packet (e.g., the DCB 154 of FIG. 1), the example packet analysis circuitry 202 monitors for arrival of such DCB packets and parses the DCB packet for one or more function directives. As used herein, a "function directive" is an instruction associated with a function that the host is expected to perform. Function directives include turning-on a function, turning-off a function (e.g., complete removal of power so that no leakage power/current occurs), and turning-on a function with one or more operating parameters (e.g., turning on a core at a particular operating frequency). In some examples, one or more function directives contained with the DCB packet (e.g., the DCB 154) are derived from a copy of the AFL 122 and/or the PFL 124 obtained by the entity sending the DCB packet. An example AFL 122 and an example PFL 124 are shown in FIG. 3.

In the illustrated example of FIG. 3, an example AFL 122 is shown on the left and an example PFL 124 is shown on the right. The example AFL 122 and/or PFL 124 include functions (e.g., functions, chiplets, circuits, cores, etc.) that a particular host is capable of executing. The AFL and/or PFL may collectively and/or independently include all or fewer such functions. One or more functions that are listed in the AFL 122 represent those functions that are powered-up and/or otherwise authorized to be powered-up on a target host device. One or more functions that are listed in the PFL 124 represent those functions that are not powered-up, dormant, and/or otherwise not authorized to consume power on the target host device. In some examples, functions listed in the AFL 122 and the PFL 124 collectively represent all of the functions that a host is capable of executing. In some such examples, if a particular function is listed in the AFL 122, then it is not listed in the PFL 124 so that power control conflicts are avoided. Similarly, in such examples if a particular function is listed in the PFL 124, then it is not listed in the AFL 122.

The example AFL 122 of FIG. 3 includes a first core 302, a second core 304 and a third core 306. The example first core 302 includes a name "CORE 1" and an identifier "09a2." Similarly, the example second core 304 and the example third core 306 include corresponding names and identifiers. In some examples, the identifiers represent hexadecimal values that are unique to all other functions that may reside on a host device. In some examples, the identifiers are process address space identifiers (PASIDs). The example AFL 122 of FIG. 3 also includes additional functions of different types, such as an example first memory bank 308, a second memory bank 310, a first I/O device 312 and a second I/O device 314. While the illustrated example of FIG. 3 includes a particular quantity of functions having particular types (e.g., cores, memory, I/O), examples disclosed herein are not limited thereto. Examples disclosed herein may include lesser or greater quantities of functions and types.

The example AFL 122 of FIG. 3 also includes metadata parameters corresponding to each function. For instance, the first core 302 includes first metadata parameters 316, the second core 304 includes second metadata parameters 318, and the third core 306 includes third metadata parameters 320. Similarly, the first memory bank 308, the second memory bank 310, the first I/O device 312 and the second I/O device 314 include respective metadata parameters 322. In operation, the metadata parameters cause respective functions to operate and/or otherwise execute in a particular manner. In some examples, the metadata parameters include a frequency value to cause the function to operate at a particular frequency. In some examples, the metadata parameters include a voltage value to cause the function to operate at a particular voltage.

The example PFL 124 of FIG. 3 includes a fourth core 324, a third memory bank 326, a fourth memory bank 328, a third I/O device 330 and a fourth I/O device 332. Each function listed in the example PFL 124 includes a respective name and identifier, similar to those described above in connection with the AFL 122. Functions listed in the example PFL 124 are powered off on the respective host so that no power is consumed by those functions, even when the host may have alternate functions (e.g., functions listed in the AFL 122) that are powered up and/or otherwise executing.

Returning to the illustrated example of FIG. 2, the example function activation circuitry 204 determines whether the function directive is associated with an activation request or a deactivation request. If the function directive is associated with an activation request, then the list management circuitry 206 determines whether the function associated with the function directive is located in the AFL 122 of the host. Generally speaking, while a requestor (e.g., an orchestrator, an OS, etc.) may have copies of the AFL 122 and the PFL 124, the host maintains a true and/or otherwise current copy of the AFL 122 and the PFL 124. In some examples, one or more other requestors may augment the operational behavior of the host at a prior time, which may cause the copies of the AFL 122 and PFL 124 of a subsequent requestor to be out-of-date. As such, if the function associated with the received function directive (e.g., received from the requestor) is in the AFL 122 of the host, then the list management circuitry 206 does not need to update the AFL 122 of the host. The example function activation circuitry 204 applies any function customization based on received DCB packet metadata, and the list management circuitry 206 publishes the current list of the AFL and/or PFL to the requestor so that it is aware of current operating conditions of the host (e.g., the example SoC 104, the example platform 106).

On the other hand, if the function directive associated with the function is associated with an activation request, but the function is not listed in the AFL 122 of the host, then the function must be currently listed in the PFL 124 and not powered-on, not active and/or otherwise not executing. To accommodate the function directive associated with the DCB packet from the requestor, the list management circuitry 206 swaps the function from the PFL 124 to the AFL 122, and the function activation circuitry 204 initializes the function on the host in view of any associated metadata parameters that will configure the function to execute in a particular manner (e.g., execute at a particular target frequency). The example list management circuitry 206 then publishes the current versions of the AFL 122 and the PFL 124 to the requestor and/or any other entities of interest.

If the function activation circuitry 204 determines that the received function directive corresponding to a function of interest is associated with deactivation, then the list management circuitry 206 determines whether the function is located in the PFL 124 of the host. If so, then there is no need to modify the PFL 124 of the host and the function activation circuitry 204 causes the function associated with the function directive to power-off and/or otherwise confirm that the particular function is already powered-off. On the other hand, if the function associated with the deactivation instruction is not in the PFL 124, then the list management circuitry 206 swaps the function from the AFL 122 to the PFL 124.

In circumstances where the DCC 102 is triggered by non-packet based signals, the example trigger monitor circuitry 208 determines whether a trigger has been received. In some examples, and distinguished from one or more DCB 154 packets received from an external entity (e.g., an orchestrator, an OS, etc.), the DCC 102 causes a dynamic function configuration event based on non-packet-based trigger. The example I/O circuitry 212 determines if the trigger event detected by the trigger monitor circuitry 208 is associated with a location based event, such as particular global positioning system (GPS) coordinates received from a GPS device. In some examples, the I/O circuitry 212 detects a wake-up on location trigger in which particular geographical information causes particular functions to be activated or deactivated.

In some examples, the I/O circuitry 212 detects a particular tracking area or geographical boundary that permits particular function services to occur that might otherwise be restricted by local government regulation(s). In some examples, a geographical boundary prohibits artificial intelligence (AI) accelerator functionality, asymmetrical encryption, and/or streaming of particular licensed content. In response to a geographic trigger, the I/O circuitry 212 generates a DCB packet and/or the list management circuitry 206 augments the local AFL 122 and PFL 124 based on one or more profile directives associated with the geographical information. For instance, a first geographical location may cause a first profile to designate particular functions to activate (e.g., add the function(s) to the AFL 122) and particular functions to deactivate (e.g., add the function(s) to the PFL 124). In some examples, the particular (e.g., first) geographical location causes a particular pair of AFL and PFL to be loaded from a memory so that the host can be configured in a particular manner.

In some examples, the I/O circuitry 212 detects a network trigger, such as a wake-up on network-type trigger that is initiated in response to detection of a particular network type (e.g., a private network, a public network, etc.). In some examples, the I/O circuitry 212 detects a network trigger based on an expected or existing network capacity metric, in which the network trigger causes a particular pair of AFL and PFL to be used that powers-up additional network interface card (NIC) resources, additional network packet processing cores and/or additional packet sniffing accelerators. In some examples, the I/O circuitry 212 causes and/or otherwise detects triggers based on IPv4 link-local broadcast packet types, IPv6 link-local multicast packet types, unicast packet types and/or IPv4 directed broadcast packet types. Depending on the packet types, the example list management circuitry 206 uses particular pairs of the AFL and PFL when configuring the host. In some examples, the I/O circuitry 212 causes a wake-up on radio access network (RAN) statistic values, which could be initiated based on L1/L2 packet statistic measurements. One or more accelerators may be activated or deactivated based on the RAN statistics. In some examples, the I/O circuitry 212 causes a trigger based on particular IQ fingerprint metrics and/or IQ patterns that indicate different network states in the RAN.

In some examples, the I/O circuitry 212 causes a trigger based on AI modeling in connection with a set of information elements associated with encoding and/or decoding of RAN and signal processing metrics. For instance, a host (e.g., the example SoC 104, the example platform 106, etc.) may include one or more accelerators and/or AI models to determine particular operating conditions of the host when function activation and/or deactivation operations should occur. Corresponding triggers detected, received and/or otherwise retrieved by the I/O circuitry 212 respond to such AI model output to invoke functions that may be helpful to accomplish particular tasks in a dynamic environment, and/or shut-down functions that are not needed and otherwise wasteful (e.g., wasteful in terms of power consumption, heat generation, etc.). In some examples, the I/O circuitry 212 retrieves particular pairs of the AFL and PFL based on AI model output in which the particular pairs of the AFL and PFL designate respective functions to activate and deactivate on the host.

In circumstances where the DCC 102 is to build, configure and/or otherwise generate a DCB packet to be transmitted to a host, the example list management circuitry 206 retrieves an AFL 122 and a PFL 124 to be used in DCB packet formation. In some examples, an entity external to the host (e.g., an orchestrator, an OS, etc.) has a copy of the AFL 122 and the PFL 124 corresponding to the host (e.g., the SoC 104, the platform 106, etc.). While the copy of the AFL 122 and the PFL 124 that the external entity has may not include the same AFL 122 functions or the same PFL 124 functions that are currently associated with the host, the combined functions listed in both the AFL 122 and the PFL 124 will still represent all candidate functions that the host is capable of executing. For example, while the external entity may have a copy of the AFL 122 that lists a first and second core as active functions, a copy of the AFL 122 on the host may only have the first core listed as an active function because, for example, a separate request was sent to the host at a prior time to dynamically change its operating configuration. As such, any subsequent configuration request (e.g., via the DCB 154) will override which host functions are activated and deactivated. Example construction and/or generation of the DCB 154 is described below in further detail, which can be used by authorized external entities to dynamically configure the host.

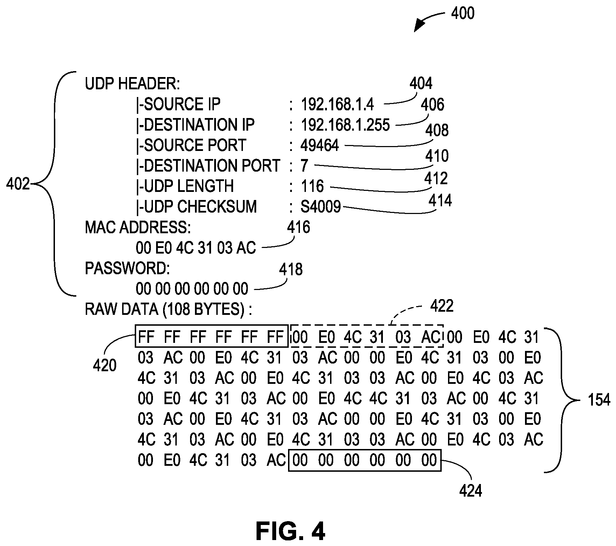

FIG. 4 is an example DCB packet 400 that includes the example DCB 154 to facilitate dynamic function control of a target host. In the illustrated example of FIG. 4, the DCB packet 400 includes a header 402. The example header 402 of FIG. 4 includes example source IP information 404, example destination IP information 406, example source port information 408, example destination port information 410, example UDP length information 412, example UDP checksum information 414, and example MAC address information 416. In some examples, the DCB packet 400 includes security and/or authentication information 418, such as a password. In some examples, to ensure the integrity and security of DCB packet generation and use, one or more authentication and/or authorization techniques may be applied, such as a challenge-response protocol (e.g., a central controller can challenge a requesting entity to prove its identity before allowing the DCB packet 400 to be processed and/or otherwise accepted). In some examples, the DCB packet 400 (or other wake-up signals), and/or function identifiers (e.g., chip identifiers, chiplet identifiers, GPU identifiers, etc.) are encrypted to prevent unauthorized use and/or access.

The example DCB 154 of FIG. 4 is a bitmap that includes an example wakeup sub-packet 420, which is identified by the example packet analysis circuitry 202 to cause further processing of other sub-packet information within the DCB 154. Generally speaking, a particular value of the wakeup sub-packet 420 allows the DCC 102 to either pay attention to incoming DCB packet information related to dynamic function control, or to ignore incoming DCB packet information unrelated to dynamic function control.

The example DCB 154 of FIG. 4 also includes one or more MAC address packets 422. In some examples, a particular number of MAC address packets 422 are concatenated to verify a particular host that the DCB packet 400 is intended to configure. While the illustrated example of FIG. 4 includes a series of sixteen (16) concatenated MAC address packets 422, examples disclosed herein may allow any other quantity to be realized.

The example DCB 154 of FIG. 4 also includes one or more payload packets 424. In some examples, the payload packets 424 identify particular ones of functions available to the host (whether current activated or deactivated), function directives (e.g., instructions to activate a function or to deactivate a function), and function operating parameter metadata. In some examples, the function operating parameter metadata includes parameters to assign particular function operating characteristics, such as causing a function to execute at a particular frequency (e.g., a core operating frequency), or causing a function to execute at a particular voltage value (e.g., a core operating voltage). In operation, the DCB 154 or the DCB packet 400 as a whole is processed and/or otherwise analyzed upon receipt by a host to cause the host to configure its one or more functions in a manner consistent with the payload packets 424. Additionally, external entities that want to cause the host to be configured in a particular manner construct and/or otherwise generate the DCB packet 400 prior to transmitting the DCB packet 400 to the host for configuration tasks.

While the host includes the DCC 102 to facilitate dynamic function control in response to received packets and/or internal triggers, one or more external entities may also include a DCC 102 for the purpose of constructing and/or otherwise generating packets 400 and/or one or more DCBs 154 contained therein. The external entity that desires to generate a DCB packet 400 invokes the example list management circuitry 206 to retrieve an AFL 122 and a PFL 124 corresponding to the target host to be dynamically configured. In some examples, the external entity acquires a copy of the AFL 122 and the PFL 124 after such lists are published by a host at a prior time. In some examples, the external entity acquires a copy of the AFL 122 and the PFL 124 from a storage repository. While the external entity may not have a current and/or otherwise updated copy of the AFL 122 and the PFL 124 corresponding to the target host, the aggregated combination of functions in each of the AFL 122 and PFL 124 represent a complete list of functions that the host is capable of executing and/or otherwise performing. If a first function is listed in the AFL 122 to represent an active (e.g., powered-on) status of that first function, then that first function is omitted from the corresponding PFL 124. In some examples, the list management circuitry 206 performs a verification that the AFL 122 and the PFL 124 do not include an instance where the same function resides on both lists.

The example function activation circuitry 204 selects a function of interest and determines whether the selected function is to be activated on the host or deactivated on the host. If the selected function is to be activated on the host, then the packet generation circuitry 210 adds the selected function to the payload packet 424 with an activation directive and any particular operating parameter metadata associated with the selected function. However, if the selected function is to be deactivated on the host, then the packet generation circuitry 210 adds the selected function to the payload packet 424 with a deactivation directive. If one or more additional functions of interest are to designated as active (e.g., activate) or inactive (e.g., deactivate), the aforementioned process repeats to build further information into the payload packet 424. When the payload packet 424 is completed, the example packet generation circuitry 210 builds a header to accompany the DCB 154 in a manner consistent with FIG. 4. The completed DCB packet 400 and its accompanying DCB 154 are then transmitted by the external entity to the target host, within which its local DCC 102 processes the incoming DCB packet for dynamic function control of the host.

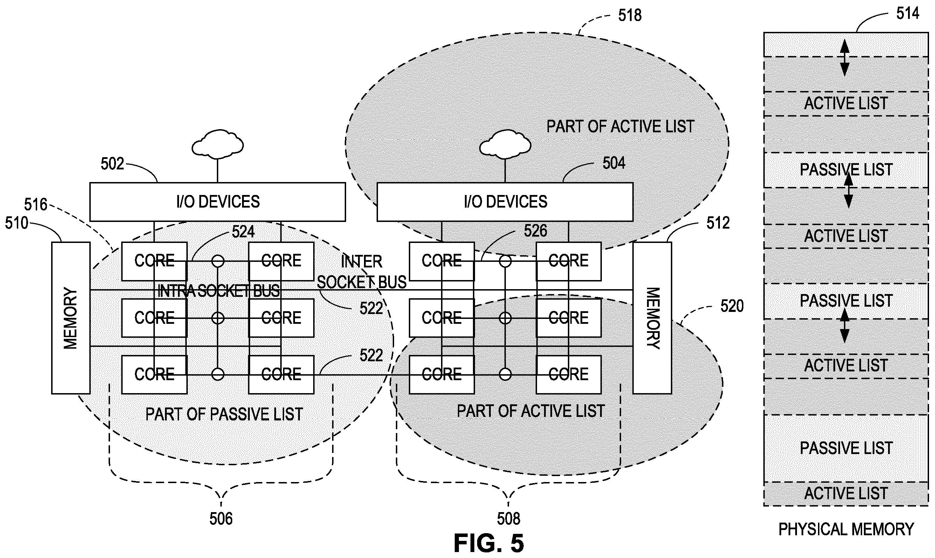

FIG. 5 is a block diagram of a portion of a host device 500 that is dynamically configured. In the illustrated example of FIG. 5, the host device 500 includes first I/O devices 502, second I/O devices 504, a first processor socket 506 having six (6) cores, a second processor socket 508 having six (6) cores, a first memory 510 communicatively connected to the first processor socket 506, and a second memory 512 communicatively connected to the second processor socket 508. In the illustrated example of FIG. 5, the first memory 510 and the second memory 512 are represented as a combined physical memory 514 having rectangular representations of individual memory banks (e.g., memory circuits). The illustrated example of FIG. 5 includes a passive list designator 516 to identify which particular components of the host device 500 are associated with the PFL 124. The illustrated example of FIG. 5 includes a first active list designator 518 and a second active list designator 520 to identify other particular components of the host device associated with the AFL 122.

The illustrated example of FIG. 5 also includes an inter socket bus 522 communicatively connected between the first processor socket 506 and the second processor socket 508. The example first processor socket 506 includes an intra socket bus 524, which may be implemented as an array or grid of bus structure communicatively connected to each of the cores within the first processor socket 506. The example second processor socket 508 includes an intra socket bus 526, which may be implemented as an array or grid of bus structure communicatively connected to each of the cores within the second processor socket 508.

In operation, the example of FIG. 5 illustrates a degree of function control granularity for a host having any number of processor sockets, I/O devices, memory, bus structure(s), and/or any other additional or alternate structure. For example, because the first processor socket 506 is designated as part of the passive list (e.g., the first processor socket 506 and the cores therein are listed in the PFL 124), fine grained control of the host may occur in an effort to conserve power, reduce heat generation and/or reduce communication bandwidth when the host does not require such resources. Alternatively, because the second processor socket 508 is designated as part of the active list (e.g., the second processor socket 508 and the cores therein are listed in the AFL 122), fine grained control of the host may occur to activate and/or otherwise power-up only those resources that might be needed (e.g., based on a load of the host). In some examples, a first portion of the individual cores within the first processor socket 506 may be active while a second portion of the individual cores within the first processor socket 506 may be deactivated.

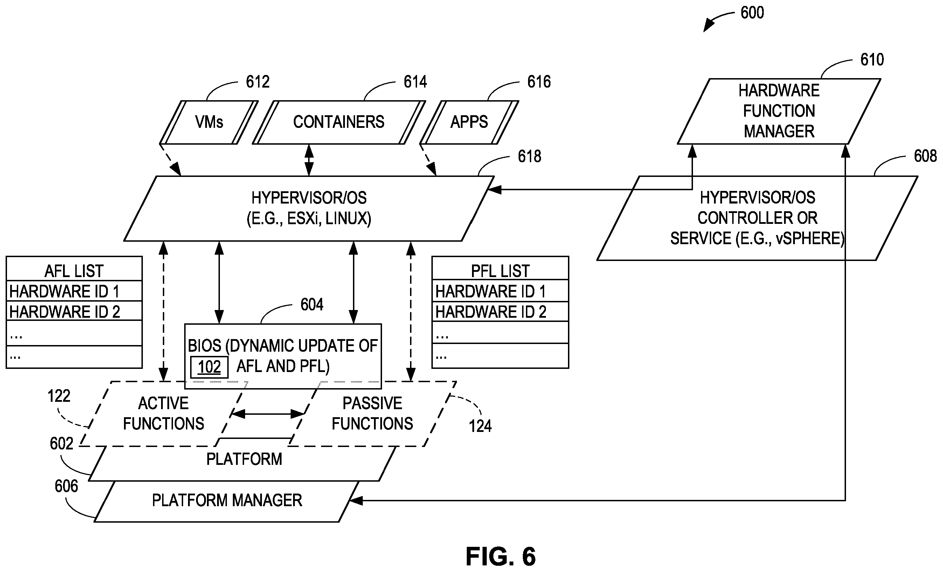

FIG. 6 is a block diagram of an example environment 600 including the DCC 102 to perform dynamic function control of a host (e.g., a platform, an SoC, etc.). In the illustrated example of FIG. 6, the environment 600 includes a platform 602 having any number of functions thereon (e.g., any number of processor cores, GPUs, accelerators, memory circuits and/or corresponding memory banks, etc.). The example platform 602 includes BIOS 604, which includes the example DCC 102 to perform dynamic function control. The illustrated example of FIG. 6 also includes a platform manager 606, which may facilitate various operation(s) of the platform 602 and/or facilitate communication between external entities 608 and the DCC 102. In some examples, the platform manager 606 functions as an API, such as the example API 108 or the example API 110 of FIG. 1. For instance, the platform manager 606 is communicatively connected to the external entities 608 as a hypervisor, an OS, or any other service. The platform manager 606 is also communicatively connected to a hardware function manager 610, in some examples.

The illustrated example of FIG. 6 also includes any number of virtual machines (VMs) 612, containers 614 and/or applications 616, which communicatively interact with a hypervisor and/or OS 618. In the illustrated example of FIG. 6, the BIOS 604 exposes the AFL 122 and the PFL 124 to external entities (e.g., the hypervisor 618, the VMs 612, the containers 614, the applications 616, etc.). While the example of FIG. 6 illustrates BIOS 604 exposing the AFL 122 and the PFL 124 for dynamic function control, examples disclosed herein are not limited thereto. For instance, alternate host arrangements are possible with participation of BIOS 604 or without participation of BIOS 604 without limitation.

In view of the example BIOS 604 of FIG. 6, previously uninitialized hosts may initially employ BIOS 604 to activate all functions, but only enumerate particular functions needed for initialization of an OS and/or startup workload requirements. During an initialization process, the BIOS 604 may perform interrupt loading, memory mapping and/or firmware loading to check health metrics of functions, and then later move configuration information and/or software images to a disk for future loading as needed. In some examples, the BIOS 604 creates the AFL 122 and the PFL 124 based on this first-time initialization, and then subsequent power-up instances of the host can avoid such exhaustive function discovery processes. However, in the event the host is modified at a later time (e.g., a new hardware component is added), then another enumeration process may occur so that the AFL 122 and the PFL 124 may be updated.

In some examples, the BIOS 604 provides the AFL 122 and the PFL 124 to one or more external entities (e.g., the OS) to allow the external entities to be informed of which functions are active, which functions are inactive, and a total aggregated list of all available functions that could be instantiated at a future time. While known OS interaction with a platform only has exposure to functions that have been enumerated by BIOS, publication of the AFL 122 and the PFL 124 to the OS permit the opportunity for the OS to generate a dynamic control bitmap 154. As such, the OS may send the DCB 154 to the BIOS 604 (in which the DCC 102 is active therein) to power up specific functions that are not otherwise known to the OS. Stated differently, the external entity initiates a wake-up (or shut-down) request for particular functions by constructing a DCB packet that includes the DCB 154. As described above, the DCB packet includes an address of the function (e.g., a chiplet address), a wake-up signal/directive, security data, and metadata to tailor a manner in which the function is to operate (e.g., operate at a particular frequency). In some examples, a network controller (e.g., NIC) of a target host receives the DCB packet, which is transmitted to and/or otherwise intercepted by the example DCC 102 for processing.

In some examples, the DCC 102 monitors functions within the AFL 122 and the PFL 124 to determine if a particular active function listed in the AFL 122 is unused for a period of time (e.g., a threshold period of time). If so, the example list management circuitry 206 swaps and/or otherwise transitions the unused function from the AFL 122 to the PFL 124. As such, a query to the host reflects an update state of host functions and their active/inactive status. In some examples, the list management circuitry 206 publishes the AFL 122 and the PFL 124 after each occurrence of a swap therebetween.

In some examples, the packet analysis circuitry 202, the function activation circuitry 204, the list management circuitry 206, the trigger monitor circuitry 208, the packet generation circuitry 210, the I/O circuitry 212, the list storage circuitry 214, and the dynamic control circuitry (DCC) 102 is instantiated by programmable circuitry executing, respectively, packet analysis instructions, function activation instructions, list management instructions, trigger monitoring instructions, packet generation instructions, input/output instructions, and list storage instructions, and/or configured to perform operations such as those represented by the flowchart(s) of FIGS. 7-9.

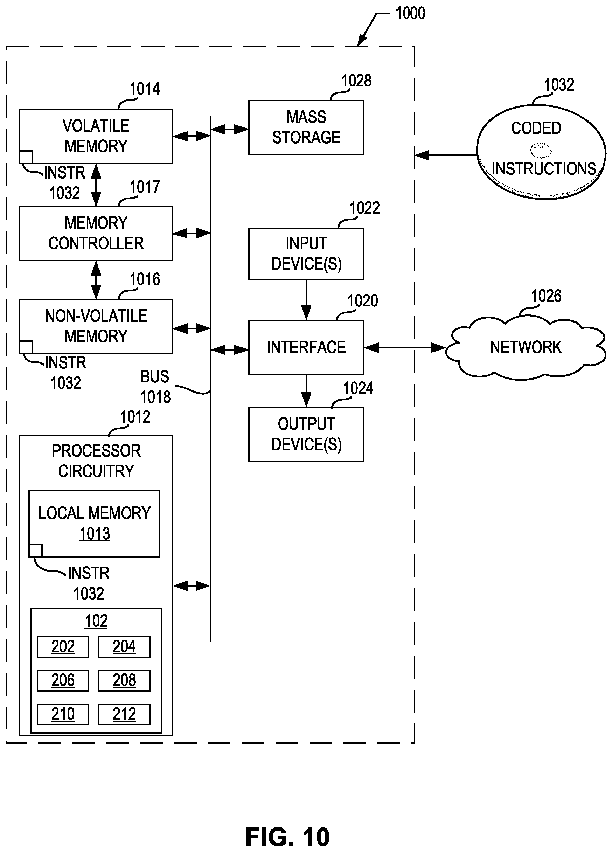

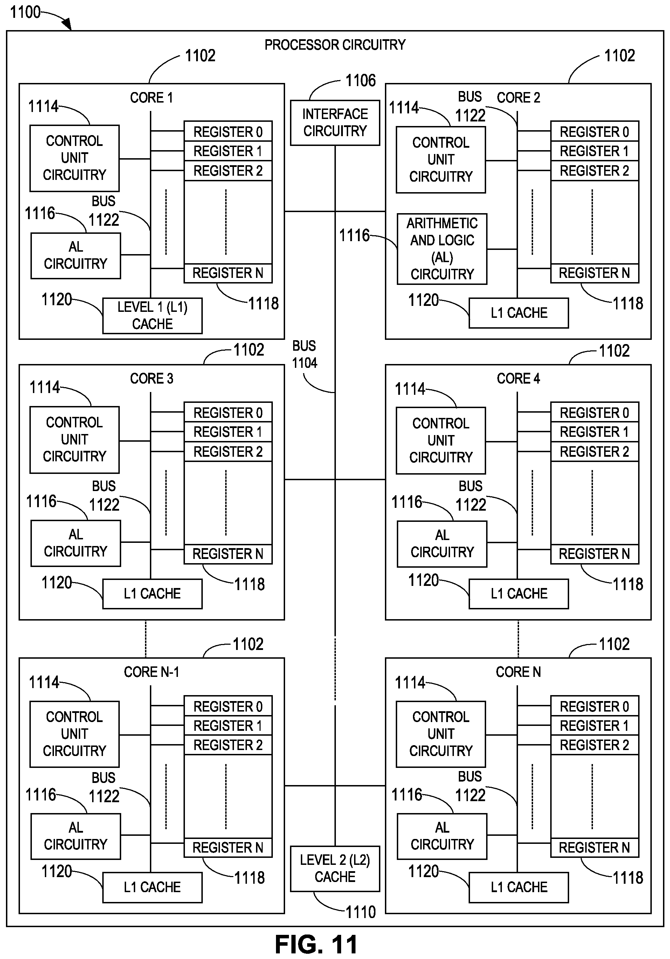

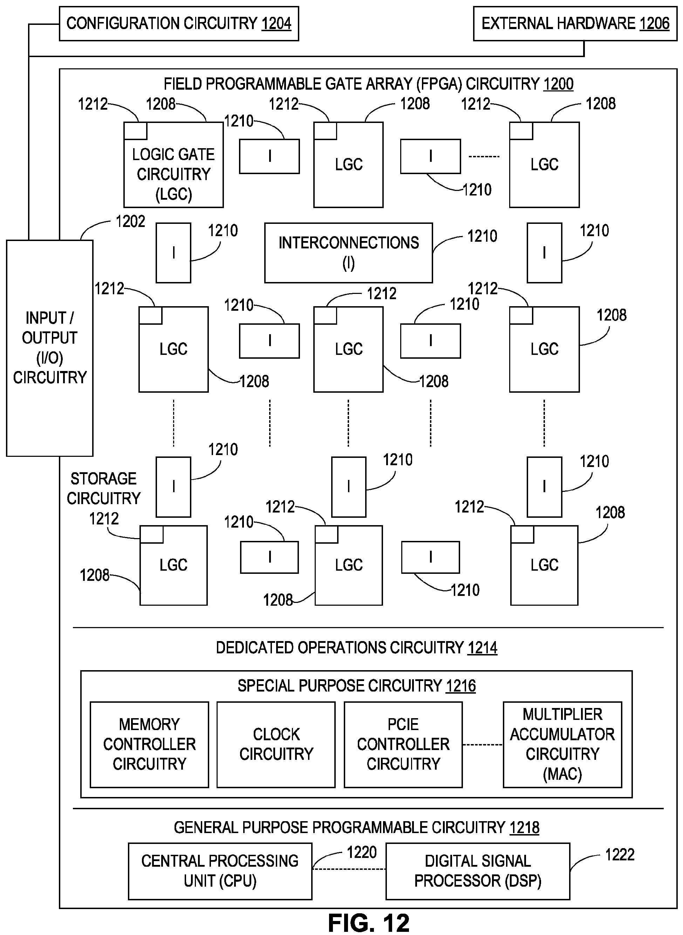

In some examples, the dynamic control circuitry 102 includes means for packet analysis, means for function activation, means for list management, means for trigger monitoring, means for packet generation, means for I/O management, and means for dynamic control. For example, the means for packet analysis may be implemented by packet analysis circuitry 202, the means for function activation may be implemented by function activation circuitry 204, the means for list management may be implemented by list management circuitry 206, the means for trigger monitoring may be implemented by trigger monitor circuitry 208, the means for packet generation may be implemented by packet generation circuitry 210, the means for I/O management may be implemented by I/O circuitry 212, and the means for dynamic control may be implemented by dynamic control circuitry (DCC) 102. In some examples, the aforementioned circuitry may be instantiated by programmable circuitry such as the example programmable circuitry 1012 of FIG. 10. For instance, the aforementioned circuitry may be instantiated by the example microprocessor 1100 of FIG. 11 executing machine executable instructions such as those implemented by at least blocks of FIGS. 7-9. In some examples, the aforementioned circuitry may be instantiated by hardware logic circuitry, which may be implemented by an ASIC, XPU, or the FPGA circuitry 1200 of FIG. 12 configured and/or structured to perform operations corresponding to the machine-readable instructions. Additionally or alternatively, the aforementioned circuitry may be instantiated by any other combination of hardware, software, and/or firmware. For example, the aforementioned circuitry may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine-readable instructions without executing software or firmware, but other structures are likewise appropriate.

While an example manner of implementing the dynamic control circuitry 102 of FIG. 1 is illustrated in FIG. 1, one or more of the elements, processes, and/or devices illustrated in FIG. 1 may be combined, divided, re-arranged, omitted, eliminated, and/or implemented in any other way. Further, the example packet analysis circuitry 202, the example function activation circuitry 204, the example list management circuitry 206, the example trigger monitor circuitry 208, the example packet generation circuitry 210, the example I/O circuitry 212, the example list storage circuitry 214, and/or, more generally, the example dynamic control circuitry 102 of FIG. 1, may be implemented by hardware alone or by hardware in combination with software and/or firmware. Thus, for example, any of the example packet analysis circuitry 202, the example function activation circuitry 204, the example list management circuitry 206, the example trigger monitor circuitry 208, the example packet generation circuitry 210, the example I/O circuitry 212, the example list storage circuitry 214, and/or, more generally, the example dynamic control circuitry 102 of FIG. 1, could be implemented by programmable circuitry in combination with machine-readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example dynamic control circuitry 102 of FIG. 1 may include one or more elements, processes, and/or devices in addition to, or instead of, those illustrated in FIG. 1, and/or may include more than one of any or all of the illustrated elements, processes and devices.

Flowchart(s) representative of example machine-readable instructions, which may be executed by programmable circuitry to implement and/or instantiate the dynamic control circuitry 102 of FIG. 1 and/or representative of example operations which may be performed by programmable circuitry to implement and/or instantiate the dynamic control circuitry 102 of FIG. 1, are shown in FIGS. 7-9. The machine-readable instructions may be one or more executable programs or portion(s) of one or more executable programs for execution by programmable circuitry such as the programmable circuitry 1012 shown in the example processor platform 1000 discussed below in connection with FIG. 10 and/or may be one or more function(s) or portion(s) of functions to be performed by the example programmable circuitry (e.g., an FPGA) discussed below in connection with FIGS. 11 and/or 12. In some examples, the machine-readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine-readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine-readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 7-9, many other methods of implementing the example dynamic control circuitry 102 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine-readable instructions described herein may be stored in one or more of a compressed format, an encrypted format, a fragmented format, a compiled format, an executable format, a packaged format, etc. Machine-readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine-readable instructions may be fragmented and stored on one or more storage devices, disks and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine-readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine-readable, computer readable and/or machine-readable media, as used herein, may include instructions and/or program(s) regardless of the particular format or state of the machine-readable instructions and/or program(s).

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 7-9 may be implemented using executable instructions (e.g., computer readable and/or machine-readable instructions) stored on one or more non-transitory computer readable and/or machine-readable media. As used herein, the terms non-transitory computer readable medium, non-transitory computer readable storage medium, non-transitory machine-readable medium, and/or non-transitory machine-readable storage medium are expressly defined to include any type of computer readable storage device and/or storage disk and to exclude propagating signals and to exclude transmission media. Examples of such non-transitory computer readable medium, non-transitory computer readable storage medium, non-transitory machine-readable medium, and/or non-transitory machine-readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine-readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine-readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine-readable instructions, etc., and/or manufactured to execute computer-readable instructions, machine-readable instructions, etc.

FIG. 7 is a flowchart representative of example machine-readable instructions and/or example operations 700 that may be executed, instantiated, and/or performed by programmable circuitry to perform dynamic function control in response to receiving DCB packet instructions. The example machine-readable instructions and/or the example operations 700 of FIG. 7 begin at block 702, at which the packet analysis circuitry 202 determines whether a DCB packet has been received. If not, the packet analysis circuitry 202 continues to monitor network traffic for a particular packet header type and/or authentication information to configure a host to exhibit function behaviors in a manner consistent with packet instructions. In some examples, the packet analysis circuitry 202, which may be part of the example DCC 102 described in connection with FIGS. 1 and 2, is part of a host to be controlled and/or otherwise modified. In some examples, the DCC 102 resides on the host as a circuit-based controller, resides on the host as an executable process, or resides proximate the host as a service provider. In some examples, the DCC 102 interacts with an API, such as the example API 108, 110 of FIG. 1 to facilitate communication between packet-based requests and one or more functions of the host (e.g., one or more chiplets).

When a packet is received, the packet analysis circuitry 202 parses the packet for one or more function directives (block 704). As described above, the function directives represent instructions associated with a function that the host is capable of performing. Directives may include instructions to turn the function on with particular operating characteristics, or to turn the function off so that no power is consumed by the host to maintain the function in an operating state or a low power operating state.

If the packet analysis circuitry 202 determines that the function directive is associated with an activation request (block 706 - "ACTIVATION"), then the list management circuitry 206 determines whether the function associated with the detected function directive is already in the AFL 122 (block 708). If so, then the list management circuitry 206 does not modify the AFL associated with the host, but verifies that the function is not also listed in the PFL 124 (block 710). As described above, any function that a host is capable of performing and/or otherwise executing is only on one list or the other, but not both. As such, the combination of the AFL 122 and the PFL 124 reveal a full suite of functions that the host is capable of performing and/or otherwise executing. The function activation circuitry 204 applies function customization based on metadata and/or other instructions in the received DCB packet (block 712). For example, function customization includes, but is not limited to causing the function to operate at a particular frequency, causing the function to operate at a particular voltage, etc. In some examples, the function activation circuitry 204 invokes a DVFS controller to cause the function to operate in a manner consistent with requested frequency or voltage parameter values.

As described above, the host AFL 122 and the host PFL 124 may be used to maintain current information of the host function configuration in the event one or more queries to the host are performed. In some examples, copies of the AFL 122 and the PFL 124 on the host are shared with one or more other information repositories so that external entities can be aware of host function capabilities and/or host function status (e.g., active or inactive). The example list management circuitry 206 publishes the AFL 122 and the PFL 124 (block 714).

If the list management circuitry 206 determines that the function is not in the AFL 122 (block 708) (meaning that it must be in the PFL 124), then the list management circuitry 206 swaps the function from the PFL 124 to the AFL 122 (block 716). The function activation circuitry 204 applies function customization based on metadata and/or other instructions in the received DCB packet (block 718). For example, function customization includes, but is not limited to causing the function to operate at a particular frequency, causing the function to operate at a particular voltage, etc. In some examples, the function activation circuitry 204 invokes a DVFS controller to cause the function to operate in a manner consistent with requested frequency or voltage parameter values.

If the function activation circuitry 204 determines that the function directive associated with a function corresponds to a deactivation request (block 706 - "DEACTIVATION"), then the list management circuitry 206 determines whether the function is already on the PFL 124 (block 720). If so, then the list management circuitry 206 does not need to modify the PFL 124 (block 722), and the function activation circuitry 204 deactivates the function (block 724). On the other hand, if the function activation circuitry 204 determines that the function directive is associated with a deactivation instruction (block 706) and the function is not listed in the PFL (block 720), then the list management circuitry 206 swaps the function from the AFL 122 to the PFL 124 (block 726).

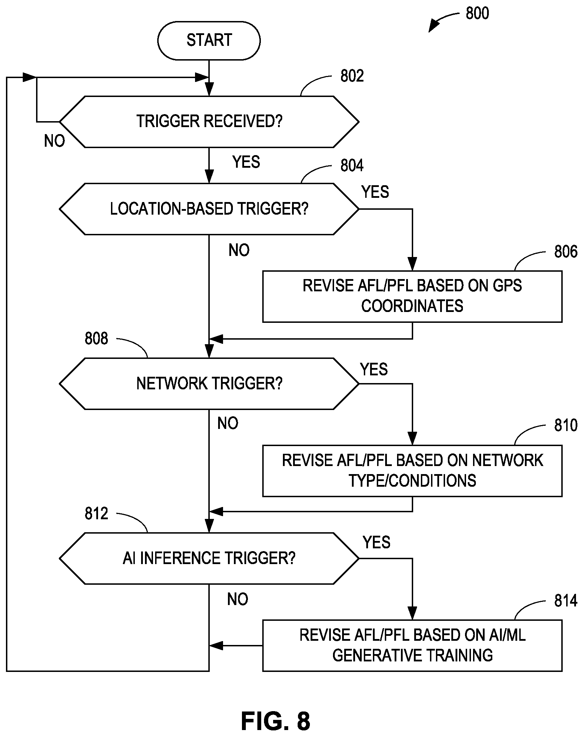

FIG. 8 is a flowchart representative of example machine-readable instructions and/or example operations 800 that may be executed, instantiated, and/or performed by programmable circuitry to configure host function behaviors based on one or more internal triggers. In the illustrated example of FIG. 8, the operations 800 begin with block 802 where the example trigger monitor circuitry 208 determines if a trigger has been received. If not, the trigger monitor circuitry 208 continues to monitor for such a trigger. When a trigger is received and/or otherwise detected (block 802, the I/O circuitry 212 determines if the trigger is associated with location-based details, such as a global-positioning-system (GPS) trigger (block 804). If so, then the list management circuitry 206 configures one or more functions to be either activated or deactivated based on the location information (block 806). In some examples, particular ones of the host functions are activated and deactivated in view of a location-based profile. Alternate locations may be associated with alternate profiles such that host operation is dependent on where the host may be located at any particular time. In some examples, wake-up triggers based on location include adding particular (e.g., additional) functions only in certain areas, such as pay for usage configurations in connection with events (e.g., concerts, sporting events, etc.). In some examples, particular functions are activated based on particular types of Edge computing resources, such as particular 5G resources, particular GNSS resources, particular UWB resources, etc. In some examples, location-based activation/deactivation of functions of a host consider particular silicon acceleration functionalities that may be allowed or restricted by local governments (e.g., AI acceleration performance, asymmetrical encryption tasks, etc.).

If the I/O circuitry 212 determines that the trigger is not associated with location-based details, such as a global-positioning-system (GPS) trigger, and/or equivalent terrestrial-based precise positioning technique (e.g., using 5G signals, using Ultra Wide Band signals) to determine position(s) (block 804), then the I/O circuitry 212 determines if the trigger is associated with network metrics (block 808). If so, then the list management circuitry 206 configures one or more functions to be either activated or deactivated based on the network information (block 810). In some examples, a wake-up trigger is initiated based on L1/L2 packet statistics or RAN measurements in real-time to enable or disable particular acceleration capabilities. In some examples, the DCC 102 determines a particular network type as private or public, in which particular functions are activated or deactivated accordingly. In some examples, wake-up triggers are based on IQ fingerprint information, such as particular IQ patterns that indicate different network states of a RAN. If the I/O circuitry 212 determines that the trigger is not associated with network-based details, then the I/O circuitry 212 determines if the trigger is associated with AI-based inference action(s) (block 812). If so, then the list management circuitry 206 configures one or more functions to be either activated or deactivated based on the AI inference action(s) (block 814). In some examples, one or more AI models are trained based on acquired data and/or measurement collection from physical layer devices, which are sometimes referred to as regenerative. Measurements may also be performed for inference data so that one or more actions may result from a trained AI model, such as activating or deactivating particular functions (e.g., chiplets) based on a trained AI model. In some examples, AI models determine gNB workloads to be processed on Edge computing devices.

In some examples, uplink workload processing functions (e.g., uplink workload processing chiplets) are enabled or disabled based on uplink statistics. In some examples, cascading AI inference may be performed to further fortify and narrow AI actions. In some examples, cascading techniques take into account different inference models that may detect, classify, and segment using different AI models, which may be used for tracking and counting certain statistics (e.g., either visually or using raw data). In some examples, physical obstructions may be present that influence the overall performance and, as a result, influence selections of the AFL and PFL. Some AI models may be based on (e.g., exclusively) complex numbers as a digital representation of real-time RAN traffic, which may be used for AI inference to assist in the selection of AFL and PFL selection(s) to avoid IQ saturation and/or noise. In some examples, downlink workload processing functions (e.g., downlink workload processing chiplets) are enabled or disabled based on downlink statistics. In either circumstance, the example DCC 102 enables particular functions to enable gNB workloads with the enabled functions (e.g., chiplets) and continues to capture RAN stats (e.g., including circumstances of retransmissions (ARQ/HARQ)).

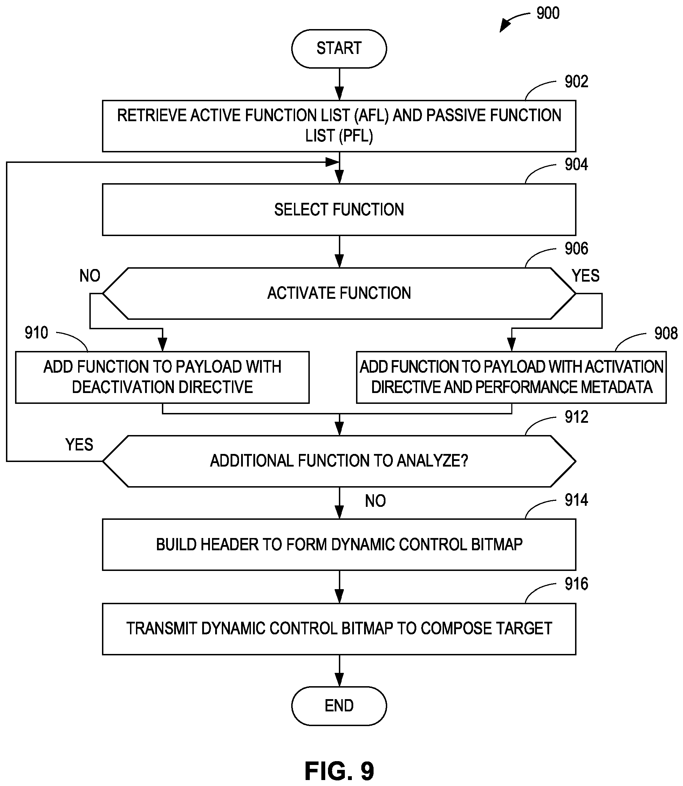

FIG. 9 is a flowchart representative of example machine-readable instructions and/or example operations 900 that may be executed, instantiated, and/or performed by programmable circuitry to build, configure and/or otherwise generate a DCB packet to be transmitted to a host to facilitate dynamic function control. In the illustrated example of FIG. 9, the operations 900 begin at block 902 where the example list management circuitry 206 retrieves an AFL 122 and a PFL 124 to be used in DCB packet formation. The example function activation circuitry 204 selects a function of interest (block 904) and determines whether the selected function is to be activated on the host or deactivated on the host (block 906). If the selected function is to be activated on the host (block 908), then the packet generation circuitry 210 adds the selected function to the payload packet (e.g., the payload packet 424 shown in FIG. 4) with an activation directive and any particular operating parameter metadata associated with the selected function (block 908). However, if the selected function is to be deactivated on the host (block 906), then the packet generation circuitry 210 adds the selected function to the payload packet with a deactivation directive (block 910). The example function activation circuitry 204 determines whether there are one or more additional functions to be analyzed and/or otherwise built into a DCB packet (block 912) and if so, control returns to block 904. Otherwise the packet generation circuitry 210 builds a header for form a dynamic control bitmap (block 914) and transmits it to a target host to compose the target host in a manner consistent with function directives (block 916).

FIG. 10 is a block diagram of an example programmable circuitry platform 1000 structured to execute and/or instantiate the example machine-readable instructions and/or the example operations of FIGS. 7-9 to implement the dynamic control circuitry 102 of FIG. 1. The programmable circuitry platform 1000 can be, for example, a server, a personal computer, a workstation, a self-learning machine (e.g., a neural network), a mobile device (e.g., a cell phone, a smart phone, a tablet such as an iPad^{™}), an Internet appliance, a gaming console, a set top box, a headset (e.g., an augmented reality (AR) headset, a virtual reality (VR) headset, etc.) or other wearable device, or any other type of computing and/or electronic device.

The programmable circuitry platform 1000 of the illustrated example includes programmable circuitry 1012. The programmable circuitry 1012 of the illustrated example is hardware. For example, the programmable circuitry 1012 can be implemented by one or more integrated circuits, logic circuits, FPGAs, microprocessors, CPUs, GPUs, DSPs, and/or microcontrollers from any desired family or manufacturer. The programmable circuitry 1012 may be implemented by one or more semiconductor based (e.g., silicon based) devices. In this example, the programmable circuitry 1012 implements the packet analysis circuitry 202, the function activation circuitry 204, the list management circuitry 206, the trigger monitor circuitry 208, the packet generation circuitry 210, the I/O circuitry 212 and the DCC 102.

The programmable circuitry 1012 of the illustrated example includes a local memory 1013 (e.g., a cache, registers, etc.). The programmable circuitry 1012 of the illustrated example is in communication with main memory 1014, 1016, which includes a volatile memory 1014 and a non-volatile memory 1016, by a bus 1018. The volatile memory 1014 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1016 may be implemented by flash memory and/or any other desired type of memory device. Access to the main memory 1014, 1016 of the illustrated example is controlled by a memory controller 1017. In some examples, the memory controller 1017 may be implemented by one or more integrated circuits, logic circuits, microcontrollers from any desired family or manufacturer, or any other type of circuitry to manage the flow of data going to and from the main memory 1014, 1016.

The programmable circuitry platform 1000 of the illustrated example also includes interface circuitry 1020. The interface circuitry 1020 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 1022 are connected to the interface circuitry 1020. The input device(s) 1022 permit(s) a user (e.g., a human user, a machine user, etc.) to enter data and/or commands into the programmable circuitry 1012. The input device(s) 1022 can be implemented by, for example, an audio sensor, a microphone, a camera (still or video), a keyboard, a button, a mouse, a touchscreen, a trackpad, a trackball, an isopoint device, and/or a voice recognition system.

One or more output devices 1024 are also connected to the interface circuitry 1020 of the illustrated example. The output device(s) 1024 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1020 of the illustrated example, thus, typically includes a graphics driver card, a graphics driver chip, and/or graphics processor circuitry such as a GPU.

The interface circuitry 1020 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1026. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 1000 of the illustrated example also includes one or more mass storage discs or devices 1028 to store firmware, software, and/or data. Examples of such mass storage discs or devices 1028 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 1032, which may be implemented by the machine-readable instructions of FIGS. 7-9, may be stored in the mass storage device 1028, in the volatile memory 1014, in the non-volatile memory 1016, and/or on at least one non-transitory computer readable storage medium such as a CD or DVD which may be removable.

FIG. 11 is a block diagram of an example implementation of the programmable circuitry 1012 of FIG. 10. In this example, the programmable circuitry 1012 of FIG. 10 is implemented by a microprocessor 1100. For example, the microprocessor 1100 may be a general-purpose microprocessor (e.g., general-purpose microprocessor circuitry). The microprocessor 1100 executes some or all of the machine-readable instructions of the flowcharts of FIGS. 7-9 to effectively instantiate the circuitry of FIG. 2 as logic circuits to perform operations corresponding to those machine-readable instructions. In some such examples, the circuitry of FIG. 1 is instantiated by the hardware circuits of the microprocessor 1100 in combination with the machine-readable instructions. For example, the microprocessor 1100 may be implemented by multi-core hardware circuitry such as a CPU, a DSP, a GPU, an XPU, etc. Although it may include any number of example cores 1102 (e.g., 1 core), the microprocessor 1100 of this example is a multi-core semiconductor device including N cores. The cores 1102 of the microprocessor 1100 may operate independently or may cooperate to execute machine-readable instructions. For example, machine code corresponding to a firmware program, an embedded software program, or a software program may be executed by one of the cores 1102 or may be executed by multiple ones of the cores 1102 at the same or different times. In some examples, the machine code corresponding to the firmware program, the embedded software program, or the software program is split into threads and executed in parallel by two or more of the cores 1102. The software program may correspond to a portion or all of the machine-readable instructions and/or operations represented by the flowcharts of FIGS. 7-9.

The cores 1102 may communicate by a first example bus 1104. In some examples, the first bus 1104 may be implemented by a communication bus to effectuate communication associated with one(s) of the cores 1102. For example, the first bus 1104 may be implemented by at least one of an Inter-Integrated Circuit (I2C) bus, a Serial Peripheral Interface (SPI) bus, a PCI bus, or a PCIe bus. Additionally or alternatively, the first bus 1104 may be implemented by any other type of computing or electrical bus. The cores 1102 may obtain data, instructions, and/or signals from one or more external devices by example interface circuitry 1106. The cores 1102 may output data, instructions, and/or signals to the one or more external devices by the interface circuitry 1106. Although the cores 1102 of this example include example local memory 1120 (e.g., Level 1 (L1) cache that may be split into an L1 data cache and an L1 instruction cache), the microprocessor 1100 also includes example shared memory 1110 that may be shared by the cores (e.g., Level 2 (L2 cache)) for high-speed access to data and/or instructions. Data and/or instructions may be transferred (e.g., shared) by writing to and/or reading from the shared memory 1110. The local memory 1120 of each of the cores 1102 and the shared memory 1110 may be part of a hierarchy of storage devices including multiple levels of cache memory and the main memory (e.g., the main memory 1014, 1016 of FIG. 10). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1102 may be referred to as a CPU, DSP, GPU, etc., or any other type of hardware circuitry. Each core 1102 includes control unit circuitry 1114, arithmetic and logic (AL) circuitry (sometimes referred to as an ALU) 1116, a plurality of registers 1118, the local memory 1120, and a second example bus 1122. Other structures may be present. For example, each core 1102 may include vector unit circuitry, single instruction multiple data (SIMD) unit circuitry, load/store unit (LSU) circuitry, branch/jump unit circuitry, floating-point unit (FPU) circuitry, etc. The control unit circuitry 1114 includes semiconductor-based circuits structured to control (e.g., coordinate) data movement within the corresponding core 1102. The AL circuitry 1116 includes semiconductor-based circuits structured to perform one or more mathematic and/or logic operations on the data within the corresponding core 1102. The AL circuitry 1116 of some examples performs integer based operations. In other examples, the AL circuitry 1116 also performs floating-point operations. In yet other examples, the AL circuitry 1116 may include first AL circuitry that performs integer-based operations and second AL circuitry that performs floating-point operations. In some examples, the AL circuitry 1116 may be referred to as an Arithmetic Logic Unit (ALU).

The registers 1118 are semiconductor-based structures to store data and/or instructions such as results of one or more of the operations performed by the AL circuitry 1116 of the corresponding core 1102. For example, the registers 1118 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1118 may be arranged in a bank as shown in FIG. 11. Alternatively, the registers 1118 may be organized in any other arrangement, format, or structure, such as by being distributed throughout the core 1102 to shorten access time. The second bus 1122 may be implemented by at least one of an I2C bus, a SPI bus, a PCI bus, or a PCIe bus.

Each core 1102 and/or, more generally, the microprocessor 1100 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1100 is a semiconductor device fabricated to include many transistors interconnected to implement the structures described above in one or more integrated circuits (ICs) contained in one or more packages.

The microprocessor 1100 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1100, in the same chip package as the microprocessor 1100 and/or in one or more separate packages from the microprocessor 1100.

FIG. 12 is a block diagram of another example implementation of the programmable circuitry 1012 of FIG. 10. In this example, the programmable circuitry 1012 is implemented by FPGA circuitry 1200. For example, the FPGA circuitry 1200 may be implemented by an FPGA. The FPGA circuitry 1200 can be used, for example, to perform operations that could otherwise be performed by the example microprocessor 1100 of FIG. 11 executing corresponding machine-readable instructions. However, once configured, the FPGA circuitry 1200 instantiates the operations and/or functions corresponding to the machine-readable instructions in hardware and, thus, can often execute the operations/functions faster than they could be performed by a general-purpose microprocessor executing the corresponding software.

More specifically, in contrast to the microprocessor 1100 of FIG. 11 described above (which is a general purpose device that may be programmed to execute some or all of the machine-readable instructions represented by the flowchart(s) of FIGS. 7-9 but whose interconnections and logic circuitry are fixed once fabricated), the FPGA circuitry 1200 of the example of FIG. 12 includes interconnections and logic circuitry that may be configured, structured, programmed, and/or interconnected in different ways after fabrication to instantiate, for example, some or all of the operations/functions corresponding to the machine-readable instructions represented by the flowchart(s) of FIGS. 7-9. In particular, the FPGA circuitry 1200 may be thought of as an array of logic gates, interconnections, and switches. The switches can be programmed to change how the logic gates are interconnected by the interconnections, effectively forming one or more dedicated logic circuits (unless and until the FPGA circuitry 1200 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 7-9. As such, the FPGA circuitry 1200 may be configured and/or structured to effectively instantiate some or all of the operations/functions corresponding to the machine-readable instructions of the flowchart(s) of FIGS. 7-9 as dedicated logic circuits to perform the operations/functions corresponding to those software instructions in a dedicated manner analogous to an ASIC. Therefore, the FPGA circuitry 1200 may perform the operations/functions corresponding to the some or all of the machine-readable instructions of FIGS. 7-9 faster than the general-purpose microprocessor can execute the same.

In the example of FIG. 12, the FPGA circuitry 1200 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1200 of FIG. 12 may access and/or load the binary file to cause the FPGA circuitry 1200 of FIG. 12 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1200 of FIG. 12 to cause configuration and/or structuring of the FPGA circuitry 1200 of FIG. 12, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1200 of FIG. 12 may access and/or load the binary file to cause the FPGA circuitry 1200 of FIG. 12 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1200 of FIG. 12 to cause configuration and/or structuring of the FPGA circuitry 1200 of FIG. 12, or portion(s) thereof.

The FPGA circuitry 1200 of FIG. 12, includes example input/output (I/O) circuitry 1202 to obtain and/or output data to/from example configuration circuitry 1204 and/or external hardware 1206. For example, the configuration circuitry 1204 may be implemented by interface circuitry that may obtain a binary file, which may be implemented by a bit stream, data, and/or machine-readable instructions, to configure the FPGA circuitry 1200, or portion(s) thereof. In some such examples, the configuration circuitry 1204 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1206 may be implemented by external hardware circuitry. For example, the external hardware 1206 may be implemented by the microprocessor 1100 of FIG. 11.

The FPGA circuitry 1200 also includes an array of example logic gate circuitry 1208, a plurality of example configurable interconnections 1210, and example storage circuitry 1212. The logic gate circuitry 1208 and the configurable interconnections 1210 are configurable to instantiate one or more operations/functions that may correspond to at least some of the machine-readable instructions of FIGS. 7-9 and/or other desired operations. The logic gate circuitry 1208 shown in FIG. 12 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1208 to enable configuration of the electrical structures and/or the logic gates to form circuits to perform desired operations/functions. The logic gate circuitry 1208 may include other electrical structures such as look-up tables (LUTs), registers (e.g., flip-flops or latches), multiplexers, etc.

The configurable interconnections 1210 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1208 to program desired logic circuits.

The storage circuitry 1212 of the illustrated example is structured to store result(s) of the one or more of the operations performed by corresponding logic gates. The storage circuitry 1212 may be implemented by registers or the like. In the illustrated example, the storage circuitry 1212 is distributed amongst the logic gate circuitry 1208 to facilitate access and increase execution speed.

The example FPGA circuitry 1200 of FIG. 12 also includes example dedicated operations circuitry 1214. In this example, the dedicated operations circuitry 1214 includes special purpose circuitry 1216 that may be invoked to implement commonly used functions to avoid the need to program those functions in the field. Examples of such special purpose circuitry 1216 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1200 may also include example general purpose programmable circuitry 1218 such as an example CPU 1220 and/or an example DSP 1222. Other general purpose programmable circuitry 1218 may additionally or alternatively be present such as a GPU, an XPU, etc., that can be programmed to perform other operations.

Although FIGS. 11 and 12 illustrate two example implementations of the programmable circuitry 1012 of FIG. 10, many other approaches are contemplated. For example, FPGA circuitry may include an on-board CPU, such as one or more of the example CPU 1220 of FIG. 11. Therefore, the programmable circuitry 1012 of FIG. 10 may additionally be implemented by combining at least the example microprocessor 1100 of FIG. 11 and the example FPGA circuitry 1200 of FIG. 12. In some such hybrid examples, one or more cores 1102 of FIG. 11 may execute a first portion of the machine-readable instructions represented by the flowchart(s) of FIGS. 7-9 to perform first operation(s)/function(s), the FPGA circuitry 1200 of FIG. 12 may be configured and/or structured to perform second operation(s)/function(s) corresponding to a second portion of the machine-readable instructions represented by the flowcharts of FIG. 7-9, and/or an ASIC may be configured and/or structured to perform third operation(s)/function(s) corresponding to a third portion of the machine-readable instructions represented by the flowcharts of FIGS. 7-9.

It should be understood that some or all of the circuitry of FIG. 1 may, thus, be instantiated at the same or different times. For example, same and/or different portion(s) of the microprocessor 1100 of FIG. 11 may be programmed to execute portion(s) of machine-readable instructions at the same and/or different times. In some examples, same and/or different portion(s) of the FPGA circuitry 1200 of FIG. 12 may be configured and/or structured to perform operations/functions corresponding to portion(s) of machine-readable instructions at the same and/or different times.

In some examples, some or all of the circuitry of FIG. 1 may be instantiated, for example, in one or more threads executing concurrently and/or in series. For example, the microprocessor 1100 of FIG. 11 may execute machine-readable instructions in one or more threads executing concurrently and/or in series. In some examples, the FPGA circuitry 1200 of FIG. 12 may be configured and/or structured to carry out operations/functions concurrently and/or in series. Moreover, in some examples, some or all of the circuitry of FIG. 1 may be implemented within one or more virtual machines and/or containers executing on the microprocessor 1100 of FIG. 11.

In some examples, the programmable circuitry 1012 of FIG. 10 may be in one or more packages. For example, the microprocessor 1100 of FIG. 11 and/or the FPGA circuitry 1200 of FIG. 12 may be in one or more packages. In some examples, an XPU may be implemented by the programmable circuitry 1012 of FIG. 10, which may be in one or more packages. For example, the XPU may include a CPU (e.g., the microprocessor 1100 of FIG. 11, the CPU 1220 of FIG. 12, etc.) in one package, a DSP (e.g., the DSP 1222 of FIG. 12) in another package, a GPU in yet another package, and an FPGA (e.g., the FPGA circuitry 1200 of FIG. 12) in still yet another package.

A block diagram illustrating an example software distribution platform 1305 to distribute software such as the example machine-readable instructions 1032 of FIG. 10 to other hardware devices (e.g., hardware devices owned and/or operated by third parties from the owner and/or operator of the software distribution platform) is illustrated in FIG. 13. The example software distribution platform 1305 may be implemented by any computer server, data facility, cloud service, etc., capable of storing and transmitting software to other computing devices. The third parties may be customers of the entity owning and/or operating the software distribution platform 1305. For example, the entity that owns and/or operates the software distribution platform 1305 may be a developer, a seller, and/or a licensor of software such as the example machine-readable instructions 1032 of FIG. 10. The third parties may be consumers, users, retailers, OEMs, etc., who purchase and/or license the software for use and/or re-sale and/or sub-licensing. In the illustrated example, the software distribution platform 1305 includes one or more servers and one or more storage devices. The storage devices store the machine-readable instructions 1032, which may correspond to the example machine-readable instructions of FIGS. 7-9, as described above. The one or more servers of the example software distribution platform 1305 are in communication with an example network 1310, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine-readable instructions 1032 from the software distribution platform 1305. For example, the software, which may correspond to the example machine-readable instructions of FIG. 7-9, may be downloaded to the example programmable circuitry platform 1000, which is to execute the machine-readable instructions 1032 to implement the dynamic control circuitry 102. In some examples, one or more servers of the software distribution platform 1305 periodically offer, transmit, and/or force updates to the software (e.g., the example machine-readable instructions 1032 of FIG. 10) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time +/- 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that perform dynamic function control of one or more devices. Examples disclosed herein may improve over known host function activation and/or deactivation tasks that occur in an imprecise manner. Known approaches utilizing host BIOS enumeration or similar enumeration techniques cause function (e.g., circuit, chiplet, etc.) power-up and initialization to occur, even in circumstances where those particular functions are not later needed for host task execution. Examples disclosed herein may also enable function activation on a host when such functions were not originally enumerated, thereby remaining invisible to external entities (e.g., invisible to operating systems, such as BIOS, that only have awareness of active functions and/or functions that have been previously enumerated by a BIOS power-on-self-test (POST)). Disclosed systems, apparatus, articles of manufacture, and methods improve the efficiency of using a computing device by preventing unnecessary and/or excessive function execution and/or power consumption, yet still permit external entity awareness that those particular functions may be activated at a future time. Disclosed systems, apparatus, articles of manufacture, and methods are accordingly directed to one or more improvement(s) in the operation of a machine such as a computer or other electronic and/or mechanical device.

Example methods, apparatus, systems, and articles of manufacture to perform dynamic function control are disclosed herein. Further examples and combinations thereof include the following:
Example 1 includes an apparatus comprising interface circuitry, machine-readable instructions, and at least one processor circuit to be programmed by the machine-readable instructions to parse a packet for a function directive, activate a function associated with the function directive based on a type of the function directive being associated with an activation instruction, disable the function associated with the function directive based on the type of the function directive being associated with a deactivation instruction, and modify the function to adjust its operation.
Example 2 includes the apparatus as defined in example 1, wherein one or more of the at least one processor circuit is to publish an active function list (AFL) and a passive function list (PFL) based on the type of the function directive.
Example 3 includes the apparatus as defined in example 2, wherein one or more of the at least one processor circuit is to modify the PFL based on the function associated with the function directive being on the PFL and associated with the activation instruction.
Example 4 includes the apparatus as defined in one or more of examples 1-3, wherein the one or more of the at least one processor circuit is to modify the AFL and the PFL by removing the function from the PFL and adding the function to the AFL.
Example 5 includes the apparatus as defined in example 2, wherein one or more of the at least one processor circuit is to modify the AFL based on the function associated with the function directive being on the AFL and associated with the deactivation instruction.
Example 6 includes the apparatus as defined in example 5, wherein the one or more of the at least one processor circuit is to modify the AFL and the PFL by adding the function to the PFL and removing the function from the AFL.
Example 7 includes the apparatus as defined in example 2, wherein one or more of the at least one processor circuit is to publish the AFL and the PFL to at least one of an operating system, a system-on-chip (SoC), a virtual machine monitor (VMM), a hypervisor, or a basic input/output system (BIOS).
Example 8 includes the apparatus as defined in one or more of examples 1-7, wherein one or more of the at least one processor circuit is to disable power consumption by the function based on the deactivation instruction.
Example 9 includes the apparatus as defined in one or more of examples 1-8, wherein the function directive includes a target device and target operating parameters.
Example 10 includes the apparatus as defined in example 9, wherein the target operating parameters include at least one of a target operating frequency, a target operating voltage, or a target operating power.
Example 11 includes the apparatus as defined in example 9, wherein one or more of the at least one processor circuit is to modify the function in accordance with the target operating parameters.
Example 12 includes the apparatus as defined in one or more of examples 1-11, wherein one or more of the at least one processor circuit is to parse the packet for a bitmap, the bitmap including a header and a payload..
Example 13 includes the apparatus as defined in one or more of examples 1-12, wherein the function is activated by at least one of a chiplet or a circuit.
Example 14 includes at least one non-transitory machine-readable medium comprising machine-readable instructions to cause at least one processor circuit to parse a packet for a function directive, activate a function associated with the function directive based on a type of the function directive being associated with an activation instruction, disable the function associated with the function directive based on the type of the function directive being associated with a deactivation instruction, and modify the function to adjust its operation.
Example 15 includes the at least one non-transitory machine-readable medium as defined in example 14, wherein the machine-readable instructions are to publish an active function list (AFL) and a passive function list (PFL) based on the type of the function directive.
Example 16 includes the at least one non-transitory machine-readable medium as defined in example 15, wherein the machine-readable instructions are to cause one or more of the at least one processor circuit to modify the PFL based on the function associated with the function directive being on the PFL and associated with the activation instruction.
Example 17 includes the at least one non-transitory machine-readable medium as defined in one or more of examples 14-16, wherein the machine-readable instructions are to cause one or more of the at least one processor circuit to modify the AFL and the PFL by removing the function from the PFL and adding the function to the AFL.
Example 18 includes the at least one non-transitory machine-readable medium as defined in example 15, wherein the machine-readable instructions are to cause one or more of the at least one processor circuit to modify the AFL based on the function associated with the function directive being on the AFL and associated with the deactivation instruction.
Example 19 includes the at least one non-transitory machine-readable medium as defined in example 18, wherein the machine-readable instructions are to cause one or more of the at least one processor circuit to modify the AFL and the PFL by adding the function to the PFL and removing the function from the AFL.
Example 20 includes the at least one non-transitory machine-readable medium as defined in one or more of examples 15-19, wherein the machine-readable instructions are to cause one or more of the at least one processor circuit to publish the AFL and the PFL to at least one of an operating system, a system-on-chip (SoC), a virtual machine monitor (VMM), a hypervisor, or a basic input/output system (BIOS).
Example 21 includes the at least one non-transitory machine-readable medium as defined in one or more of examples 14-20, wherein the machine-readable instructions are to cause one or more of the at least one processor circuit to disable power consumption by the function based on the deactivation instruction.
Example 22 includes the at least one non-transitory machine-readable medium as defined in one or more of examples 13-21, wherein the machine-readable instructions are to cause one or more of the at least one processor circuit to parse the packet for a bitmap, the bitmap including a header and a payload.
Example 23 includes a method comprising parsing a packet for a function directive, activating, by at least one processor circuit programmed by at least one instruction, a function associated with the function directive based on a type of the function directive being associated with an activation instruction, disabling, by one or more of the at least one processor circuit, the function associated with the function directive based on the type of the function directive being associated with a deactivation instruction, and modifying, by one or more of the at least one processor circuit, the function to adjust its operation.
Example 24 includes the method as defined in example 23, further including publishing an active function list (AFL) and a passive function list (PFL) based on the type of the function directive.
Example 25 includes the method as defined in example 24, further including modifying the PFL based on the function associated with the function directive being on the PFL and associated with the activation instruction.
Example 26 includes the method as defined in example 25, further including modifying the AFL and the PFL by removing the function from the PFL and adding the function to the AFL.
Example 27 includes the method as defined in one or more of examples 24-26, further including modifying the AFL based on the function associated with the function directive being on the AFL and associated with the deactivation instruction.
Example 28 includes the method as defined in example 27, further including modifying the AFL and the PFL by adding the function to the PFL and removing the function from the AFL.
Example 29 includes the method as defined in one or more of examples 24-28, further including publishing the AFL and the PFL to at least one of an operating system, a system-on-chip (SoC), a virtual machine monitor (VMM), a hypervisor, or a basic input/output system (BIOS).
Example 30 includes the method as defined in example 23, further including disabling power consumption by the function based on the deactivation instruction.
Example 31 includes the method as defined in example 23, wherein instantiating the function further includes instantiating with at least one of a target operating frequency, a target operating voltage, or a target operating power.
Example 32 includes the method as defined in example 23, further including parsing the packet for a bitmap, the bitmap including a header and a payload.
Example 33 includes an apparatus comprising interface circuitry, machine-readable instructions, and at least one processor circuit to be programmed by the machine-readable instructions to generate a first payload associated with a first function to activate on a composable platform, generate a second payload associated with a second function to disable on the composable platform, append the first payload and the second payload to a header to form a dynamic control packet, the header including an address of the composable platform, and cause the interface circuitry to transmit the packet.
Example 34 includes the apparatus as defined in example 33, wherein one or more of the at least one processor circuit is to determine the first function by parsing (a) an active function list (AFL) and (b) a passive function list (PFL).
Example 35 includes the apparatus as defined in example 33, wherein the dynamic control packet is to cause the first function to activate, and cause the second function to deactivate on the composable platform, the deactivated second function to consume zero power.
Example 36 includes the apparatus as defined in example 33, wherein one or more of the at least one processor circuit is to generate the first payload with target operating parameters.
Example 37 includes the apparatus as defined in example 36, wherein one or more of the at least one processor circuit is to cause respective ones of the target operating parameters to cause the first function to exhibit at least one of a target operating frequency, a target operating voltage, or a target operating power.
Example 38 includes the apparatus as defined in example 33, wherein the first function is instantiated by at least one of a circuit, a chiplet, an accelerator circuit, a graphical processing unit (GPU), a phase-locked-loop (PLL) circuit, a processor core circuit, or a bus.
Example 39 includes At least one non-transitory machine-readable medium comprising machine-readable instructions to cause at least one processor circuit to generate a first payload associated with a first function to activate on a composable platform, generate a second payload associated with a second function to disable on the composable platform, append the first payload and the second payload to a header to form a dynamic control packet, the header including an address of the composable platform, and transmit the packet.
Example 40 includes the at least one non-transitory machine-readable medium of example 39, wherein the machine-readable instructions are to cause one or more of the at least one processor circuit to determine the first function by parsing (a) an active function list (AFL) and (b) a passive function list (PFL).
Example 41 includes the at least one non-transitory machine-readable medium of example 39, wherein the machine-readable instructions are to cause one or more of the at least one processor circuit to cause the first function to activate, and cause the second function to deactivate on the composable platform, the deactivated second function to consume zero power.
Example 42 includes the at least one non-transitory machine-readable medium of example 39, wherein the machine-readable instructions are to cause one or more of the at least one processor circuit to generate the first payload with target operating parameters.
Example 43 includes the at least one non-transitory machine-readable medium of example 42, wherein the machine-readable instructions are to cause one or more of the at least one processor circuit to cause the first function to exhibit at least one of a target operating frequency, a target operating voltage, or a target operating power.
Example 44 includes the at least one non-transitory machine-readable medium of example 39, wherein the machine-readable instructions are to cause one or more of the at least one processor circuit to instantiate the first function on at least one of a circuit, a chiplet, an accelerator circuit, a graphical processing unit (GPU), a phase-locked-loop (PLL) circuit, a processor core circuit, or a bus.
Example 45 includes a method comprising generating a first payload associated with a first function to activate on a composable platform, generating a second payload associated with a second function to disable on the composable platform, appending the first payload and the second payload to a header to form a dynamic control packet, the header including an address of the composable platform, and transmitting the packet.
Example 46 includes the method as defined in example 45, further including determining the first function by parsing (a) an active function list (AFL) and (b) a passive function list (PFL).
Example 47 includes the method as defined in example 45, further including activating the first function, and deactivating the second function on the composable platform, the deactivated second function to consume zero power.
Example 48 includes the method as defined in example 45, further including generating the first payload with target operating parameters.
Example 49 includes the method as defined in example 48, wherein the target operating parameters cause the first function to exhibit at least one of a target operating frequency, a target operating voltage, or a target operating power.
Example 50 includes the method as defined in example 45, further including instantiating the first function on at least one of a circuit, a chiplet, an accelerator circuit, a graphical processing unit (GPU), a phase-locked-loop (PLL) circuit, a processor core circuit, or a bus.
Example 51 includes an composable platform comprising interface circuitry, machine-readable instructions, and at least one processor circuit to be programmed by the machine-readable instructions to determine a type of a trigger associated with a composable platform, determine a first function associated with the composable platform to instantiate based on an active function list (AFL), determine a second function associated with the composable platform to disable based on a passive function list (PFL), and activate the first function and deactivate the second function based on the trigger.
Example 52 includes the composable platform as defined in example 51, wherein one or more of the at least one processor circuit is to determine the type of trigger based on detecting a location signal, and configure the composable platform when the location signal matches a target location value.
Example 53 includes the composable platform as defined in example 51, wherein one or more of the at least one processor circuit is to determine the type of the trigger based on detecting a network condition, and configure the composable platform when the network condition matches a target network value.
Example 54 includes the composable platform as defined in example 53, wherein one or more of the at least one processor circuit is to detect the network condition as at least one of a public network type, a private network type, or network statistics values.
Example 55 includes At least one non-transitory machine-readable medium comprising machine-readable instructions to cause at least one processor circuit to determine a type of a trigger associated with a composable platform, determine a first function associated with the composable platform to instantiate based on an active function list (AFL), determine a second function associated with the composable platform to disable based on a passive function list (PFL), and activate the first function and deactivate the second function based on the trigger.
Example 56 includes the at least one non-transitory machine-readable medium of example 55, wherein the machine-readable instructions are to cause one or more of the at least one processor circuit to determine the type of trigger based on detecting a location signal, and configure the composable platform when the location signal matches a target location value.
Example 57 includes the at least one non-transitory machine-readable medium of example 55, wherein the machine-readable instructions are to cause one or more of the at least one processor circuit to determine the type of the trigger based on detecting a network condition, and configure the composable platform when the network condition matches a target network value.
Example 58 includes the at least one non-transitory machine-readable medium of example 57, wherein the machine-readable instructions are to cause one or more of the at least one processor circuit to detect the network condition as at least one of a public network type, a private network type, or network statistics values.
Example 59 includes a method comprising determining a type of a trigger associated with a composable platform, determining a first function associated with the composable platform to instantiate based on an active function list (AFL), determining a second function associated with the composable platform to disable based on a passive function list (PFL), and activating the first function and deactivate the second function based on the trigger.
Example 60 includes the method as defined in example 59, further including determining the type of trigger based on detecting a location signal, and configure the composable platform when the location signal matches a target location value.
Example 61 includes the method as defined in example 59, further including determining the type of the trigger based on detecting a network condition, and configuring the composable platform when the network condition matches a target network value.
Example 62 includes the method as defined in example 61, further including detecting the network condition as at least one of a public network type, a private network type, or network statistics values.
The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus comprising:
interface circuitry;
machine-readable instructions; and
at least one processor circuit to be programmed by the machine-readable instructions to:
parse a packet for a function directive;
activate a function associated with the function directive based on a type of the function directive being associated with an activation instruction;
disable the function associated with the function directive based on the type of the function directive being associated with a deactivation instruction; and
modify the function to adjust its operation.

2. The apparatus as defined in claim 1, wherein one or more of the at least one processor circuit is to publish an active function list (AFL) and a passive function list (PFL) based on the type of the function directive.

3. The apparatus as defined in any preceding claim, wherein one or more of the at least one processor circuit is to modify the PFL based on the function associated with the function directive being on the PFL and associated with the activation instruction.

4. The apparatus as defined in claim 3, wherein the one or more of the at least one processor circuit is to modify the AFL and the PFL by removing the function from the PFL and adding the function to the AFL.

5. The apparatus as defined in any preceding claim , wherein one or more of the at least one processor circuit is to modify the AFL based on the function associated with the function directive being on the AFL and associated with the deactivation instruction.

6. The apparatus as defined in claim 5, wherein the one or more of the at least one processor circuit is to modify the AFL and the PFL by adding the function to the PFL and removing the function from the AFL.

7. The apparatus as defined in any preceding claim , wherein one or more of the at least one processor circuit is to publish the AFL and the PFL to at least one of an operating system, a system-on-chip (SoC), a virtual machine monitor (VMM), a hypervisor, or a basic input/output system (BIOS).

8. The apparatus as defined in any preceding claim, wherein one or more of the at least one processor circuit is to disable power consumption by the function based on the deactivation instruction.

9. The apparatus as defined in any preceding claim, wherein one or more of the at least one processor circuit is to parse the packet for a bitmap, the bitmap including a header and a payload.

10. A method comprising:
parsing a packet for a function directive;
activating, by at least one processor circuit programmed by at least one instruction, a function associated with the function directive based on a type of the function directive being associated with an activation instruction;
disabling, by one or more of the at least one processor circuit, the function associated with the function directive based on the type of the function directive being associated with a deactivation instruction; and
modifying, by one or more of the at least one processor circuit, the function to adjust its operation.

11. The method as defined in claim 10, further including publishing an active function list (AFL) and a passive function list (PFL) based on the type of the function directive.

12. The method as defined in claim 11, further including modifying the PFL based on the function associated with the function directive being on the PFL and associated with the activation instruction.

13. The method as defined in claim 12, further including modifying the AFL and the PFL by removing the function from the PFL and adding the function to the AFL.

14. The method as defined in any preceding claim, further including disabling power consumption by the function based on the deactivation instruction.

15. The method as defined in any preceding claim, wherein instantiating the function further includes instantiating with at least one of a target operating frequency, a target operating voltage, or a target operating power.
